Europäisches Patentamt

(19) European Patent Office

Office européen des brevets

(11) Publication number: **0 180 602**
**B1**

# (12) EUROPEAN PATENT SPECIFICATION

(45) Date of publication of the patent specification:
**01.03.89**

(21) Application number: **85901929.1**

(22) Date of filing: **24.04.85**

(86) International application number:
**PCT/AU 85/00089**

(87) International publication number:
**WO 85/04892 (07.11.85 Gazette 85/24)**

(51) Int. Cl.⁴: **C 09 K 11/88**

(54) **INFRARED SENSITIVE PHOSPHOR AND METHOD OF PREPARING SAME.**

(30) Priority: **24.04.84 US 603304**

(43) Date of publication of application:
**14.05.86 Bulletin 86/20**

(45) Publication of the grant of the patent:
**01.03.89 Bulletin 89/9**

(84) Designated Contracting States:
**AT BE CH DE FR GB IT LI LU NL SE**

(56) References cited:
**GB-A- 650 459**
**US-A- 2 527 365**

(73) Proprietor: **ALTERNATIVE ENERGY RESEARCH CENTRE, INC., Panama City (PA)**

(72) Inventor: **KABAY, Gabriella, Via Castegnini, I-21 Sovizzo (Province of Vicenza) (IT)**
Inventor: **KABAY, Ernest, Via Castegnini, I-21 Sovizzo (Province of Vicenza) (IT)**

(74) Representative: **Beresford, Keith Denis Lewis et al, BERESFORD & Co. 2-5 Warwick Court High Holborn, London WC1R 5DJ (GB)**

# Description

## 1. Field of invention

The present invention relates to a method for preparing luminescent materials, and the new infrared sensitive luminescent materials obtained thereby.

## 2. Prior art

As is known, the infrared sensitive luminescent materials, hereinafter also called «infrared sensitive phosphors», or simply by «phosphors», were developed previously mainly to render infrared rays visible. They have practical application in optical systems, optical memory cells, in detecting and locating infrared beams, in laser patterns photography, etc.

The ideal infrared sensitive phosphors can be excited, depending on their type by short wavelength radiation and/or by visible light. A part of the exciting radiation is absorbed by the phosphor, the rest is reradiated as reflection or fluorescence. After the suspension of excitation a small part of the absorbed energy is reradiated in the form of fast-decay phosphorescence. The rest of the absorbed energy is trapped in the luminescent material for weeks or months with reasonably small energy loss. The trapped, or stored energy can be released from the phosphor in form of visible light by stimulating the phosphor with a longer wavelength radiation like infrared, which accelerates the long-decay phosphorescence.

In technical terms, these luminescent materials are characterized by absorption spectra, (i.e. those wavelengths of exciting radiation which will cause the phosphor to store energy in substantial quantity), stimulating spectra (i.e. those wavelengths of radiation which cause the phosphor to release energy in the form of stimulated emission), stimulated emission spectrum (i.e. the spectral distribution of the released energy), and quantum efficiency (which indicates the quality of the phosphor in terms of photon conversion).

Specific examples of prior art infrared sensitive phosphors of the above-mentioned type are the doubly activated strontium sulfide, calcium sulfide strontium selenide or mixture of the foregoing matrix based phosphors. The prior art phosphors of the aforementioned type may be symbolized as:

SrS: (Eu:Sm) – strontium sulfide based phosphor.

CaS: (Eu:Sm) – calcium sulfide based phosphor.

SrSe: (Eu:Sm) – strontium selenide based phosphor.

(SrS:SrS): (Eu:Sm) – mixed based phosphor.

The best known of infrared phosphors of the above-mentioned type are Standard VI, B-1 and mixed based SrS:SrSe phosphors.

Objects of the invention.

It is one object of the present invention to provide efficient ultraviolet and visible light – absorbing, infrared – stimulable, and visible light – emitting luminescent material with a desirable quantum efficiency e.g. 10–20%.

Another object of the invention is to provide an improved luminescent material which is efficient enough for utilization in the field of radiated energy storage, infrared to visible light up conversion, light source for commercial application, and component material for opto-electronic devices.

A further object of the present invention is to provide improved infrared sensitive phosphors with a broad absorption spectrum, being excitable by wavelengths in the ultraviolet and visible light.

Another object of this invention is to provide infrared sensitive phosphors where the stimulated emission color is adjustable around the maximum sensitivity of the human eyes.

A still further object of the invention is to provide a luminescent material having improved energy storage ability because of decreased phosphorescence as spontaneous emission.

Another object of the invention is to provide infrared sensitive phosphors which can be excited by very high intensity of ultraviolet or visible light without destroying the energy absorption and energy storage ability of such materials.

Another object of the invention is to provide novel strontium sulfide based luminescent materials (phosphors) which can absorb radiated energy in the ultraviolet and visible spectrum and emit in the yellow light, near to the maximum spectral sensitivity of the human eye, when stimulated with infrared radiation.

A further object of this invention is to provide novel strontium selenide based luminescent materials (phosphors) wherein the luminescent properties of the surface layer are substantially identical to the interior parts.

Another object of this invention is to provide novel strontium selenide based luminescent materials (phosphors) which can absorb radiated energy in part of the ultraviolet and visible spectrum and the emission color adjustable between green and yellow and stimulatable by infrared radiation.

A further object of this invention is to provide novel sulfide based luminescent materials (phosphors) wherein a strontium sulfide base matrix has been replaced wholly or in part by calcium sulfide.

Another object of this invention is to provide novel selenide based luminescent materials (phosphors) wherein a strontium selenide base matrix has been replaced wholly or in part by calcium selenide.

Another object of this invention is to provide novel selenide and sulfide mixed based luminescent materials (phosphors), wherein the strontium selenide base component has been replaced wholly or in part by calcium selenide, and the strontium sulfide base component has been replaced wholly or in part by calcium sulfide.

A still further object of this invention is to provide novel methods for the production of infrared

sensitive luminescent materials (phosphors) having the characteristics set forth in the foregoing objects.

The above-mentioned objects and other will be evident from the more detailed description of the invention which follows:

Brief description of the drawings

For a better understanding of the invention, reference should be made to the accompanying drawings. Figure 1, Figure 2 and Figure 3 show the internal furnace arrangement for carrying out the method of the present invention. Figure 1 corresponds to Example 1, Figure 2 to Example 2 and Figure 3 corresponds to Example 3 described hereinafter in detail.

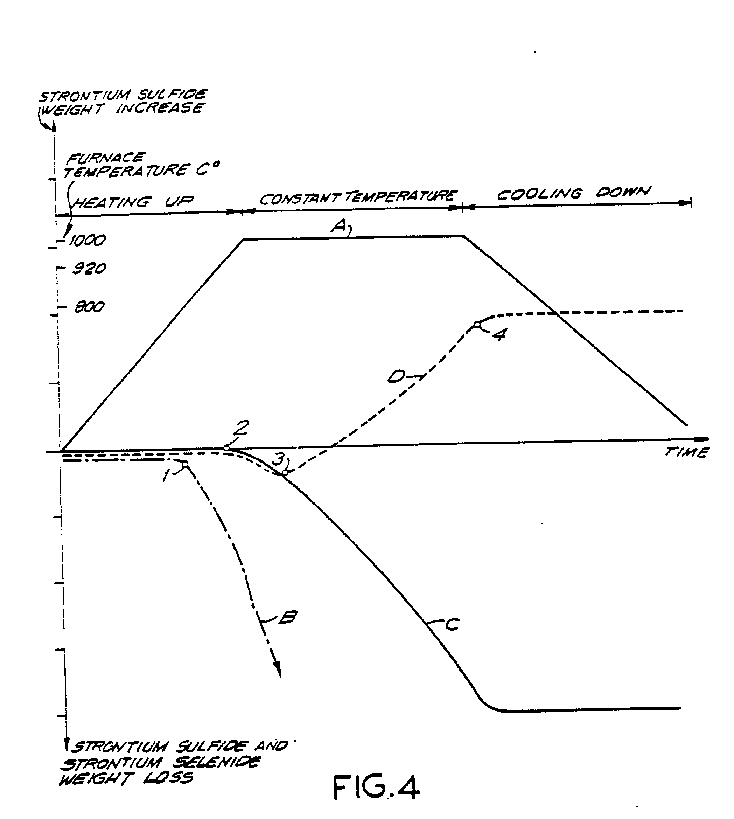

Further, Figure 4 shows the thermal gravity measurement during recrystallization of the strontium sulfide based sample. (Example 1).

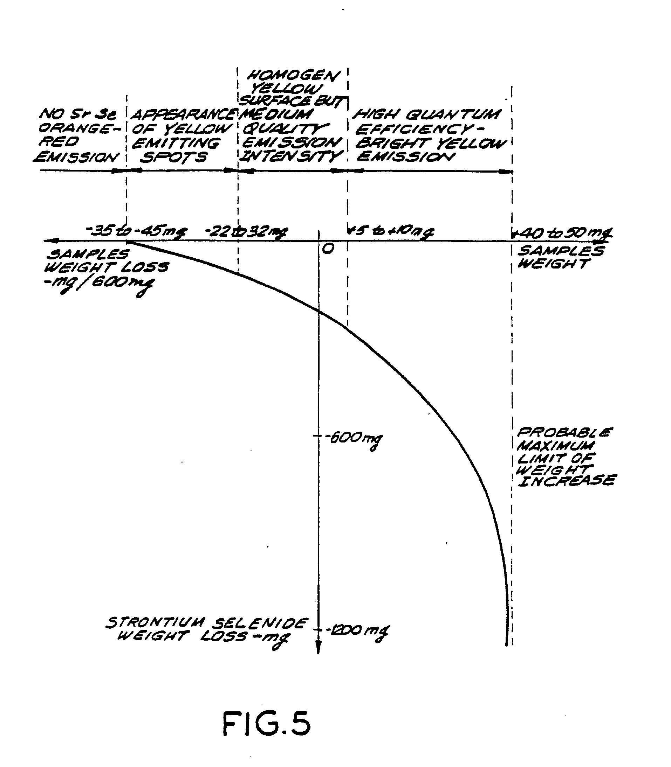

Figure 5 shows the luminescent property changes of the strontium sulfide based samples, depending on the weight loss of strontrium selenide and the weight change of strontium sulfide based sample. (Example 1).

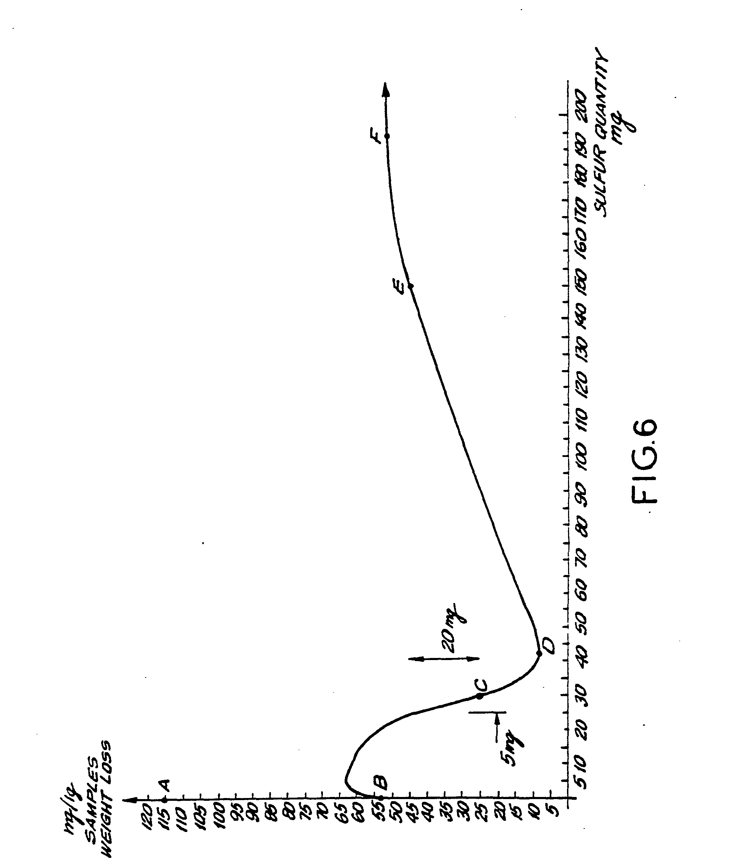

Figure 6 corresponds to strontium selenide based sample recrystallized with various quantities of sulfur.

General description of the invention

It has been shown that the objects of this invention may be realized by the utilization of a novel method for preparing luminescent materials, according to the invention, consisting of recrystallization of strontium sulfide, calcium sulfide, strontium selenide, calcium selenide or a mixture of the foregoing to distribute and to suspend activator ions in their matrix, and to exchange original sulfur and/or selenium anions by anion complexed containing sulfur and selenium atom(s) and having the formula $S_nSe_m$ wherein n and m are integers as described hereinafter in detail.

The anion complexes of this invention may be represented by the formula $S_nSe_m$ wherein n and m are integers depending upon the number of component atoms. While it is believed that n=1 and m=1 are the most likely values, it is possible that variations in the values of n and m exist.

A possible generic formula for the anion complexes is $S_mSe_n$ wherein n is 1 to x and m is 1 to y wherein x and y are the number of maximum atom rings possible at the temperature at which the anion complexes formed.

It is believed, although the present invention is not limited thereto, that anion complexes formed at temperatures between 900 to 1000 °C would have the formula $S_nSe_m$ wherein n is 1 to 10 and m is 1 to 6 because at this temperature range the sulfur vapor contains at maximum 10 atom rings and the selenium vapor contains at maximum 6 atom rings.

Specific examples of suitable base materials are those selected from the group consisting of SrS, CaS, SrS+CaS, SrSe, SrSe+SrS, SrSe+Cas, SrSe+Cas+SrS and at last forementioned base materials wherein CaSe has replaced at least in part SrSe.

The simplest method to prepare the infrared sensitive phosphors of this invention is by heating the mixture of the base, flux (fluxes), and selecting two or more rare earth activators at a suitable temperature (e.g. 1000 °C) in an inert flowing gas atmosphere in an electrical furnace.

After the recrystallization heat-treatment for a suitable period of time e.g., about 60 minutes duration, the samples of both SrS and SrSe based materials exhibit a substantial weight loss. The strontium selenide based phosphors have higher degree weight loss, than those prepared from strontium sulfide. The loss in weight of samples is due to the evolution of selenium or sulfur. During heat treatments selenium or sulfur are detectable in the surrounding vapors of the samples. The thermal dissociation of strontium sulfide or strontium selenide is responsible for the evolution of sulfur or selenium. The degree of weight loss depends mainly on the firing temperature, quantity or type of flux (fluxes) used, flow rate of neutral gas, the ratio between weight and free surface of samples, and the duration of heat treatment.

The high temperature thermal dissociation starts between 800–1000° Centigrade. At first in the surface of the sample an increased static fluctuation of heat motion can give such high energy as to diffuse a lattice unit from solid into vapor phase, create vapor around the sample, and simultaneously vacancy in the crystal structure. Anions from deeper parts will jump from one vacant anion site to another towards the surface, and from the surface leave the sample to the surrounding vapor. If the gas flow is sufficiently high, it carries away the freed particles from the sample surroundings, to the cold part of the furnace and the gas particles form solid sulfur rings, fron strontium sulfide base, and selenium for strontium selenide base.

The cooled strontium sulfide and strontrium selenide based phosphors will be comprised of large number of defects as anion vacant sites. This causes noticeable difference of the luminescent properties of the phosphors, in comparison with samples, where the thermal dissociation is lowered. High thermal dissociation during the heat treatment practically can destroy the luminescent properties of strontium selenide based phosphors.

As will be apparent from the discussion which follows, the activators (e.g., Eu, Sm, Bi, Gd, Dy, Lu, Yb, Tm, Er, Tb) are distributed and suspended in their base or matrix in a conventional manner. For example, the activators may be in an amount from 5 to 500 ppm of the base material. From the discussion appearing hereinlater, the conditions used for effectuating the recrystallization of the luminscent base material will be readily apparent to those skilled in the art. The recrystallization temperature should be high enough to effectively release by thermal decomposition the sulfur, selenium or sulfur and selenium anions in the desired amount for subsequent replacement or exchange by the sulfur-selenide comples vapor particles. On the other hand, the temperature should be low enough not to deleteriously affect the luminescent base or matrix. Of course, the optimum temperatur ranges depend upon the chemical makeup of the luminescent base material. In general, the recrystallization of the luminescent base material is carried out at a temperature of 900 to 1200 °C, preferably 950 to 1150 °C and most preferably 950 °C to 1100 °C.

Particularly useful infrared sensitive phosphor composition of the invention are those obtained by forming a fused base matrix comprising 60–90% of the original base matrix and 40–10% strontium and/or calcium cations paired with the $S_nSe_m$ anion complexes, said base having incorporated therein activator pairs.

In general, the time for heating or firing the phosphor mixture is 10 to 200 minutes depending on the weight of the sample. For example, for a 1 g sample 60 minutes is a suitable firing time.

It should be apprent from the discussion which follows that in the surrounding environment sufficient sulfur and selenium atoms must be in contact to form a significant amount of the sulfur and selenium anion complex vapor particles for replacement of at least some of the sulfur and selenium anions released by thermal decomposition of the luminescent base. As will be discussed later in detail, if the luminescent base itself does not provide a sufficient number of the desired anions forming the desired anion complexes, an extraneous source may be used.

Specific description of the invention

It should be understood that in each of the three Examples I, II and III which follows, a conventional infrared SrS, SrSe and SrS–SrSe based phosphor (Example A, Example B or Example C) is compared for luminescent characteristics with improved SrS, SrSe and Sr S– Se based phosphors prepared in accordance with the present invention (Examples 1, 2 and 3 respectively).

Example I
Example A (Conventional strontium sulfide based prior art phosphor)
Background

SrS: (Eu:Sm)-strontium sulfide based europium-samarium activated infrared sensitive phosphor was invented by Franz Urbach and the prepartion method and some luminescent properties are disclosed in U.S. Patent 2 522 074 (1950).

The same material can be prepared by a different method, as described by Roland Ward in Ref. Jour. Am. Chem. Soc. 69 (1947): by heating a mixture of pure strontium sulfide at 1000 Centigrade in Nitrogen with about 12% of its weight of a mixture of equal weight of calcium fluoride and strontium sulfate to which samarium and europium salts have been added. The concentration of samarium and europium, which are activators, is of the order of 200 parts per million of the strontium sulfide. The luminescent properties of this phosphor material, as listed below, were collected from various scientific literatures and from data sheets of currently commercially available products, and they were also confirmed by measurements carried out on phosphor samples made as the reproduction of preparation method described by Ward.

The following summarized luminescent characteristics of SrS: (Eu:Sm) phosphor are given to provide clear comparison of this phosphor and the modified strontium sulfide based europium, samarium activated luminescent material, made by carrying out the method according to the present invention and described hereinlater.

Luminescent properties of SrS: (Eu:Sm) phosphor:
– Absorption spectrum:
400–500 nm, maximum of 480 nm.
– Stimulated emission spectrum:
550–710 nm, maximum at 630 nm.
color: orange
– Quantum efficiency: 1%
– Energy storage ability:
$10^{17}$ photons per cubic centimeter
– Maximum permitted excitation intensity to provide fully charged phosphor: 100 Lux VL.
– Phosphorescence decay; fast.

Improved modified SrS based phosphor of present invention

It was found, that if an europium-samarium activated and fluxed strontium sulfide based phosphor sample (e.g. 1 g of Example A) is fired in a furnace in such a way that an amount (e.g. 4 g) of strontium selenide is placed in a separate crucible next to the strontium sulfide sample, on the side where the nitrogen enters into the muffle furnace, the presence of strontium selenide during heat treatment causes a high degree change in the luminescent properties of the strontium sulfide phosphor. On the surface layer of the sample the emission color is shifted from orange to yellow, and the brightness of the phosphor is greatly increased. More particularly, (as shown in Figure 4), in the first section of the heat treatment, warming up the samples to 1000 Centigrade, first the strontium selenide starts its thermal dissociation around 800 Centigrade. This generates selenium vapor in the furnace atmosphere. The strontium sulfide sample does not absorb any selenium from the surrounding vapor until the temperature reaches about 900–950 Centigrade since the strontium sulfide sample does not start its thermal dissociation until such a temperature is reached. Upon thermal dissociation of the strontium sulfide, sulfur particles are added to the selenium vapor. The evolution of sulfur creates vacant anion sites in the strontium sulfide structure. Simultaneously and continuously during the second part of the heat treatment, when the temperatures of the samples are approaching 1000 Centigrade, and held constantly on the firing temperature, the strontium sulfide is absorbing particles from the surrounding vapor. The absorbed particles consist of sulfur and selenium, and they will occupy the vacant anion sites in the crystal structure of the strontium sulfide. The newly filled holes in the surface layer constitute a blocking barrier for the further sulfur evolution from the inner parts of the strontium sulfide which may cause sulfur dislocation in the interior of the sample. Only the absorbing surface layer of the sample will then become a high efficient yellow luminescent material. The internal parts will change to a brownish color, compared to a strontium sulfide based phosphor sample fired without the presence of strontium selenide.

This heat treatment results in the expansion and increased weight of the original strontium sulfide based phosphor. The increased weight of the sample demonstrates the vapor absorption and more particularly that selenium was also absorbed in the form of sulfur-selenium anion complexes. Figure 5 shows how the stimulated emission color is shifted from red to yellow, and the weight of the sample is increased, related to the increased amount of selenium vapor.

The thermal gravity measurements during the heat treatments and at the end of it indicates an ion exchange in the strontium sulfide where sulfur ions are replaced by heavier ion complexes, containing sulfur and selenium atom(s). These heavy anions are believed to be SSe ions which are formed in the vapor phase by the reaction of sulfur and selenium. While the present invention is not limited to any theory of how the complexes are formed, it is believed that most of the sulfur replacing anions are two atomic ions formed by exchanging one sulfur atom of the S–S bond by one selenium atom to form S–Se bond, but the two atomic molecules can attract further sulfur or selenium atoms to form more complex ion structures, or the selenium atom(s) can disturb the sulfur catenation to form two to ten atomic rings, and replacing some of the sulfur by selenium, these absorbed ion complexes also can play an important part. It is believed that the new phosphor may be symbolized by $(Sr^{--}S^{--}: Sr^{--}SSe^{--})$:(Flux): SmEu.

Example 1

The following description is an easily reproducible example for the preparation of a new phosphor.

The component materials: strontium sulfide as base, calcium fluoride and strontium sulfate as fluxes, samarium sulfate and europium sulfate as activators, as well as strontium selenide are TMI 25 pure, commercially available chemicals.

The first step of the preparation is the fine grinding of the strontium sulfide and the fluxes separately in a ball mill, then the powders have to be dried several days in a drying furnace, around 100 Centigrade.

The phosphor mixture consists of 10 g of strontium sulfide 0.9 g calcium fluoride, 0.9 g strontium sulfate 0.004 g samarium sulfate, 0.005 g europium sulfate.

The mixture is intimately ground in a ball mill for an hour, and again dried at 100 Centigrade for several days.

From the dried powder we pressed pellets of 16 mm diameters, 1 g in weight, by using pressure of 3–4 tons. The pellets are dried again as before.

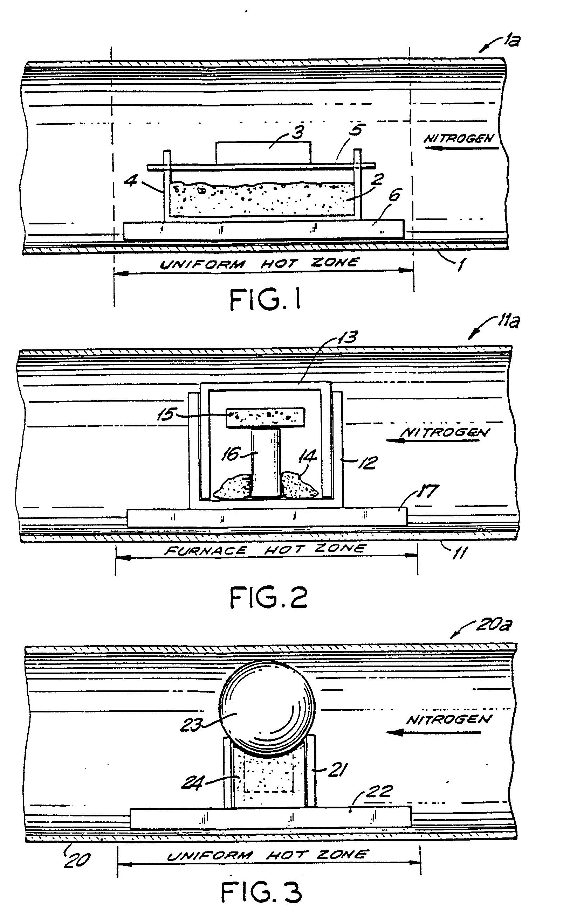

The firing was done is a horizontal electrical tube furnace 1a (See Figure 1), using 50 mm diameter quartz muffle tube 1, cleam alumina crucibles.

The quantity of strontium selenide used was 4 g (indicated at 2 in the figure).

The pellet 3 was loaded and the strontium selenide 2 put into the cold furnace with the forllowing arrangement: the strontium selenide was placed in an alumina boat 4 (50×30×10 mm dimensions) and spread evenly. The boat 4 is supported by an alumina slab 6. The pellet 3 was placed above the strontium selenide 2 held by two 1 mm diameter alumina rods 5.

Before firing, the furnace tube was evacuated to 0.02 m bar then the nitrogen was introduced, with a flow rate of 50 ml/min. Nitrogen contained not more than 2 ppmV oxygen, and not more than 3 ppmV moisture. The furnace was heated up to 1000 Centigrade with an average rate of 10 c/minute and was held at that temperature for 60 minutes. The sample was cooled down in flowing nitrogen with the rate of 10 c/minute to room temperature.

The resultant phosphor, removed from the furnace can be easily separated from the supporting alumina rods, but they may leave small marks on the bottom side of the pellet.

The weight of the pellet was measured, and a 20 mg weight increase was found.

The accompanying Figure 4 shows the result of the thermal gravity measurements. The curve A: the furnace temperature in time. Curve B is the weight loss of strontium selenide versus time and temperature, when it is fired alone. Curve 6 is the weight loss of the strontium sulfide base phosphor, versus time and temperature, when it is fired alone. Curve D is the weight diagram for the strontium sulfide based phosphor versus time and temperature, when it is fired together with strontium selenide according to the invention. The point 1 on Curve B and the point 2 on Curve C show the beginning of the thermal dissociation for strontium selenide, and the strontium sulfide based phosphor. Curve D, between the points 1 and 2 shows no weight change for the strontium sulfide based phosphor pellet notwithstanding that there is sufficient selenium vapor in the atmosphere. The same curve between points 2 and 3 shows weight loss to some degree, but simultaneously from point 2, the vapor absorption is already starting. At point 3, when the rate of absorption is finally higher than the weight loss from thermal dissociation, the strontium sulfide based pellet starts increasing its weight, and ends up with a final weight increment shown in point 4.

It was found that many variations and alternations can be made in the preparation and the heat treatment. In the following we disclose some of the more significant modifications.

Strontium sulfide can be replaced by calcium sulfide wholly or partly, but the stimulated emission color in that case is shifted to longer wavelength.

In the preparation of our phosphor, different known fluxing agents can be used. For example, we found that the calcium fluoride flux can be replaced by strontium fluoride, lithium fluoride, magnesium fluoride, or combinations of these. Moreover, their proportion to the base matrix (e.g. strontium sulfide) can be anything from 1 to 25% by weight, preferably 6 to 18% by weight and most preferably 6 to 12% by weight of the base matrix.

The activators, samarium, europium can be introduced in their oxide or chloride form. The concentration of europium can be varied from 10 to 300 ppm. The concentration of the samarium can also be varied from 10 to 300 ppm.

At the grinding process we found that the quality of the grinding is very important for a good phosphor. We used wet grinding with acetone in the ball mill which was later evaporated.

The drying was found at every stage of phosphor preparation to be very significant, for good results.

It is not necessary to make pellets out of the strontium sulfide mixture. It can be fired in powder form. In this case we used separate crucibles in the firing for the strontium selenide, and the phosphor mixture.

For the strontium selenide, its dissociation can be increased by grinding it to a fine powder, and by adding fluxes like calcium fluoride, strontium sulfate, etc. It was also noticed that the weight loss of the strontium selenide depends strongly on its preparation and purification method, and wide variations exist between different lots.

It is apparent from the earlier discussions that the function of the strontium selenide is to generate selenide vapor at the appropriate section of the heat treatment. Naturally, selenium vapor can be generated by other methods. If the strontium selenide is replaced by a mixture of 0.6 g of strontium oxide and 0.4 g of selenium, the major part of the selenium will evaporate below 580 Centigrade, but due to chemical reactions it will retain some selenium which will be released at higher temperatures. Also, selenium can be replaced in the furnace tube on the side where the nitrogen enters, its temperature controlled independently from the sample, evaporated very gently at the appropriate section of the heat treatment of the sample, and the nitrogen will carry the selenium vapor to the sample atmosphere. The technique of selenium evaporation can be improved by adding a small quantity of lithium fluoride to the selenium.

Further variation can be made with the firing temperature. Good results can be achieved between 975 and 1075 Centigrade. The firing time can vary between 30 and 90 minutes.

The nitrogen flow can be varied to a certain extent from 50 ml/min. Other inert gases can replace the nitrogen, like argon, etc.

Luminescent properties of our new phosphor of

Example 1

The novel modified strontium sulfide base phosphor of Example 1 is a novel luminescent material, with extended absorption spectrum in the short and long ultraviolet radiation, and with the highly increased quantum efficiency, so it is superior to existing phosphors for pratical application.

The following data are for the surface layer of our phospher pellets.

Absorption spectrum:
This is the electromagnetic spectral band in which the luminescent material is able to absorb and store energy in significant quantity. The fluorescence absorption spectrum is similar to the stimulated emission absorption spectrum, but its intensity depends on the exhaustion level of the luminescent sample. We used a simple method to obtain the absorption spectrum by using 10 nm band width excitation stepping from 200 nm to 800 nm. After excitation step of two minutes duration we left the sample to rest for one minute, and then we measured the total energy released by stimulated emission to reach a level near to exhaustion. After we stepped with the excitation 10 nm further, we repeated the process.

The intensive absorption spectrum: from 220 nm to 530 nm. We located two distinctly separate peaks. The first in the UV and the second centering in the blue light at around 450 nm.

Emission spectrum:
This is the spectral distribution of stimulated emission. The intensive emission spectrum: from 530 nm to 640 nm.
Maximum peak: around 575 nm.
Color: yellow.

Stimulating spectrum:
This is the long wavelength absorption spectrum, causing stimulated emission.
Intensive stimulating spectrum: from 800 nm to 1200 nm.
Maximum: between 950 and 1050 nm.

Quantum efficiency:
The measured quantum efficiency of the samples varied from 8 to 11%.
The method of measurement was to compare our samples to the commercially available U-70 phosphor, which has the quantum efficiency of 1%, and the conditions were set for optimum for the U-70 phosphor.

Excitation conditions:
Maximum permitted excitation intensity to provide fully charged phosphor is higher than 100 000 Lux V.L.

Storage ability:
The phosphor loses less than 3% of its stored energy during three days storage by phosphorescence at room temperature.

Quenching

The phosphor exhibits sensitivity for quenching in orange.

The new recrystallization method, as described in the invention, covers a wide range of preparation procedures, proportions of components, firing conditions. The improvements in quantum efficiency and energy absorption abilityas a consequence of the resultant new host crystal, is not restricted to any particular sample preparation method given earlier.

Example II
Example B. (Conventional SrSe based prior art phosphor)

The SrSe: (Eu:Sm) phosphor was developed and investigated by Roland Ward at the Polytechnic Institute of Brooklyn, 1947, Ref. Jour. Am. Chem. Soc. 69, 1727 (1947). Further reference can be found in U.S. Patent 2 527 365 (1950) by H.W. Leverenz.

This phosphor material due to its low infrared sensitivity and very weak stimulated emission intensity was rather a research sample for further development, than a commercial product. To avoid confusion it should be mentioned that in the scientific literature the SrSe: (Eu:Sm) symbol often refers to phosphors where extra sulfur or other ions are added to the base, and it is not the present case.

Luminescent characterictics of the SrSe: (Eu:Sm) phosphor are listed below for comparison with improved phosphors prepared in accordance with the present invention and described hereinlater.

Luminescent properties of SrSe: (Eu:Sm) phosphor:
— Absorption spectrum: blue light
— Stimulated emission spectrum: greenish-yellow
— Quantum efficiency: extremely low, no exact data available.
— Maximum permitted exciting intensity to provide fully charged phosphor: 100 Lux.
— Phosphorescence decay: long and very intense.

Improved modified Sr Se based phosphor of present

Invention

It was found that a SrSe based, fluxed, samarium, europium activated phosphor e.g. Example B after heat treatment ends with noticeable weight loss, which is due to the thermal dissociation of strontium selenide, and consequently to the evolution of selenium. The volatile selenium leaves behind unpaired strontium cations, or in other words, anionic vacancies. The reason why the strontium selenide phosphor has bad luminescence quality is because its crystal structure comprises a large number of defects. If the same phosphor is fired in a semi-closed space, the resultant phosphor has decreased weight loss, and a brighter green emission, than samples recrystallized in open space. An explanation of this is that the evoluted selenium particles can reenter from the vapor to the strontium selenide.

We discovered that if we fire a strontium selenide based fluxed, europium, samarium activated phosphor in a semi-closed space, where in addition to the selenium vapor sulfur vapor is also present in some concentration, the resultant phosphor is a very efficient, bright green or yellow emitting, infrared sensitive material all through the cross section of the sample.

More particularly, in the first part of the heat treatment (warming up the sample to 1000 Centigrade), at first the solid sulfur melts, then vaporizes. At lower temperatures, the semi-closed space around the strontium selenide based phosphor sample is filled up with sulfur vapor, containing $S_2$ to $S_{10}$ molecules. It is also possible that the sulfur and selenium atom(s) in the gas phase are forming more complex structure containing more than one sulfur and/or selenium atoms, these anions also can be absorbed by the base matrix. A part of the vapor escapes from the semi-closed space to the outer furnace atmosphere. At temperatures higher than 850 Centigrade, the vapor around the phosphor sample predominately consists of S2 two-atomic molecules. Around this temperature or somewhat lower, the strontium selenide sample starts its thermal dissociation, adding selenium particles to the sulfur vapor. The evolution of selenium creates vacant anion sites in the strontium selenide structure.

Simultaneously and continuously during the second part of the heat treatment, when the temperature of the sample is approaching 1000 Centigrade, and held constantly on that temperature, the strontium selenide is absorbing particles from the vapor immediately surrounding it in the semi-closed space. The absorbed particles consist of sulfur and selenium, and they will occupy the vacant anion sites in the crystal structure of the strontium selenide. The absorbed ions can be sulfur of polysulfide if the sulfur concentration is high in the vapor, alternatively at low sulfur concentration most of the absorbed ion is selenium, but at appropriate sulfur and selenium concentration in the vapor, SSe ions are most likely formed, and absorbed by the strontium selenide. The emission color changes, as the sample absorbs sulfur, selenium, SSe ions. The sulfur ions shift the emission color from green to orange, the selenium ions improve the green emission, and the absorbed SSe ions are responsible for the very bright yellow emission of the modified strontium selenide based, europium, samarium activated phosphor. When the strontium selenide starting base phosphor is fired as above, the thermal gravity measurements show that the relative weight increase of the sample can be attributed to the condition when every sulfur atom in the vapor attracts one selenium atom to form SSe ion which is then absorbed by the strontium selenide. It is believed that the aforesaid new phosphors can be tentatively symbolized by:

$$(Sr^{--}Se^{--}:Sr^{--}SSe^{--}):(flux):Sm:Eu$$

and with optional SrS contents as

$$(Sr^{++}Se^{--}:Sr^{--}SSe^{--}:Sr^{--}S^{--})$$
$$(flux):Sm:Eu$$

## Example 2

The following description is an easily reproducible example for the preparation of a novel modified Sr Se based phosphor in accordance with the present invention. The component materials strontium selenide as base, calcium fluoride flux, samarium sulfate and europium sulfate as activators, as well as sulfur, are TMI 25 purity, commercially available chemicals.

The first step of the preparation is the fine grinding of the strontium selenide and the fluxes separately in a ball mill, then the fluxes are dried well in a drying furnace, around 100 Centigrade.

The phosphor mixture consists of 10 g of strontium selenide, 0.9 g calcium fluoride, 0.004 g samarium sulfate, 0.005 g europium sulfate.

The mixture is intimately ground in a ball mill for 30 minutes. From the powder we pressed pellets, 16 mm diameter, 1 g in weight by using pressure of 3–4 tons.

The firing was done in a horizonal electrical tube furnace 11 a shown in Figure 2, using 50 mm diameter quartz muffle tube 11 and clean alumina crucibles 12 and 13.

The quantity of sulfur used was 0.04 g.

The semi-closed space was constructed as it is shown in Figure 2. According to that we used two alumina crucibles where one 13 was smaller, so it can be fitted into the other 12 upside down. The volume of the semi-closed space was 10 ml.

The 0.04 g sulfur 14 was then placed at the bottom of the bigger crucible 12 around its center, where the strontium selenide based phosphor pellet 15 was supported by a 6 mm diameter, 10 mm long alumina tube 16. The crucible 12 is supported by an alumina slab 17. The cover 13 was placed in position, then the sample was loaded into the cold furnace 11a. Before firing, the furnace tube 11 was evacuated to a 0.02 m bar then the nitrogen was introduced, with a flow rate of 45 ml/min. The nitrogen contained not more than 2 ppmV oxygen, and not more than 3 ppmV moisture.

The furnace was heated up to 1000 Centigrade with a rate of 10 C/min, and was held at that temperature for 60 minutes. The sample was cooled down in flowing nitrogen to room temperature. The resulting phosphor removed from the furnace can be easily separated from the supporting alumina tube, but this leaves a mark on the bottom side of the pellet.

The resulting phosphor has a bright yellow stimulated emission color. When the quantity of the sulfur was changed, compared with the previous example, it was found that the emission color shifted from green to orange.

Sulfur quantity and emission color

Figure 5 illustrates how the emission color of the improved Sr Se based phosphor of this invention changes from green to orange, depending on the quantity of the sulfur used in the recrystallization process, as carried out according to this invention. In Figure 6 the marked «sulfur quantities» on the horizontal axis are relative to: weight of the strontium selenide based sample, the volume of the semi-closed space, and how well the semi-closed space is isolated from the outer furnace atmosphere. More particularly, the data shown in Figure 6, refer to 1 g sample weight, and 10 ml space capacity, the volume of the semi-closed space was 25 times that of the sample. It is more difficult to give exact information regarding the insulation level of the semi-closed recrystallization space. Nevertheless, the insulation level can be described with a ratio of uncovered and covered weight loss for a 1 g strontrium selenide based phosphor sample, fired without additional sulfur. In the given example, that ratio was 115/52 mg.

It is apparent from the foregoing discussions that the function of the sulfur is to generate sulfur vapor, and the function of the cover to keep the sulfur particles in the sample surrounding area during recrystallization, so when the strontium selenide sample starts its dissociation, and generates selenium vapor, the ratio of sulfur and selenium contents in the reaction space is appropriate.

Referring to Figure 6, a 1 g strontium selenide based phosphor sample fired without cover and with no added sulfur, has a weight loss of around 115 mg. The large weight loss causes many defects as anion vacancies. Consequently, the stimulability of this phosphor is close to zero. This is marked as point «A» on Figure 6.

When the strontium selenide sample is fired as above, but with cover (in a semi-closed space) the weight loss of the sample is reduced to about 52 mg. It is clear that most of the evoluted selenium returns from the gas phase to the phosphor, resulting in less crystal defects, and its luminescent properties start improving, showing a weak green emission for fluorescence or stimulation. This is marked as point «B» in Figure 6.

The section from point B to C on the curve, shows an intensive decrease of weight loss of the strontium selenide sample, when a small amount of sulfur is introduced. This change in the weight loss cannot be attributed exclusively to the absorption of the sulfur, because its quantity is less than the resultant decrease in weight loss of the sample. This fact illustrates clearly that the sulfur vapor has an indirect function, more particularly, it attracts selenium particles in the vapor and carries them back to the sample. In other words, the rate of absorption is highly increased. In the section from point B to C, the resultant phosphors contain in small proportion $S_nSe_m$ anions in solu-

tion. The stimulated emission color is slowly shifted from green to yellow. The intensity of emission is also increased.

The section from C to D in Figure 6 shows further decrease of the weight loss of the sample with increased sulfur contents in the semi-closed space. As the sample is absorbing SSe ions in large quantity, its weight lossis decreasing, the emission color is shifting further to yellow, and the stimulated emission intensity is further increasing.

The section from D to E on the curve indicates a tendency to increase weight loss resulting in the sulfur proportion in the vapor of the semi-closed space becoming greater so that the strontium selenide sample will start to absorb in addition to the $S_nSe_m$ anion complexes sulfur not linked to selenium. In passing, it should be pointed out that sulfur and selenium can also fill up vacancies in each of the bases represented by Examples 1–3 herein but the possibility for this ion exchange is the highest for the selenide based matrix. As the absorption capacity of the SrSe sample is limited to the number of holes created by the evolution of selenium, these holes will be filled partly by sulfur ions, which are about three times lighter than the SSe ions. The emission color shifts from yellow to orange, but the intensity of the stimulated emission does not increase.

The section from E to F on the curve shows the same tendency as the section before. The emission color is further shifted to orange, due to the increased concentration of strontium sulfide. The last section of the curve from point F shows no significant further weight change for the strontium selenide sample.

The optimum quantity of sulfur to prepar our new luminescent material, with the recrystallization technique and conditions described earlier – is marked between points C and F on Figure 6. The emission color of the phosphors varies between green and orange determined by the quantity of sulfur used.

The preparation technique of our new phosphor is not limited to the examples given earlier. It is obvious that many variations can be made in the preparation and the heat treatment. In the following we give a summary for the sample preparation and for the new recrystallization process, to describe the objects of our invention more accurately.

The strontium selenide based, fluxed activated phosphor mixture can be made with many previously known methods. The type of the activator salts used and their concentration can vary in rather a large scale, as it is described in earlier publications. The heat treatment as described in the invention is partly a common recrystallization procedure to incorporate the activator ions into the matrix. On the other hand, it provides a solid vapor interface and ion exchange for the strontium selenide where the SSe ions are replacing partly the selenium anions in the phosphor lattice.

The firing conditions, like firing temperature, time, inert atmosphere, gas flow, heating up and cooling down rate, etc., can be changed in some degree, from the data given in our example. As is seen from the description of our invention, we carried out the recrystallization in a special semi-closed atmosphere which contains a vapor mixture of sulfur and selenium particles, and it is obvious that with other furnace arrangements the same or better results can be obtained, if the same atmosphere is created. (If the sulfur is mixed into the strontium selenide based sample, it will also generate sulfur vapor but unless the sulfur is very pure, it can contaminate the end product).

The weight and the weight loss of the sample to the weight of the sulfur and the volume of the sample to the volume of the semi-closed, space determine the quality of the phosphor. In our examples, we have given concrete quantites. For commercial phosphor production it is important to find the suitable sulfur quantity and the suitable volum of the semi-closed space for any given quantity of phosphor sample. We found that the sulfur quantity in relation to the weight of the sample can be determined by experimental method to achieve the desired color and brightness.

Luminescent properties of improved SrSe based phosphor of example 2

The novel strontium selenide based phosphor of Example 2 is a new luminescent material, with variable emission spectra between green and orange, depending on the sulfur quantity, as described earlier. As this phosphor is different from existing phosphors with the extended absorption spectrum in the short and long ultraviolet radiation, and with the highly increased quantum efficiency, so it is superior to existing phosphors for practical uses. The variation in emission color is just slight modification of luminescent properties of our new phosphor, so we consider them to be the same luminescent material.

Absorption spectrum:

This is the electromagnetic spectral bandwidth which the luminescent material is able to absorb and store energy in significant quantity. The fluorescence absorption spectrum is similar to the stimulated emission absorption spectrum, but its intensity depends on the exhaustion level of the luminescent sample. We used a simple method to obtain the absorption spectrum by using 10 nm bandwidth excitation, stepping from 200 nm to 800 nm. After every excitation step of two minutes duration, we let the sample rest for one minute, and then measured the total energy released by stimulated emission to reach a level near to exhaustion. After we stepped with the excitation 10 nm further, we repeated the process.

The intensive absorption spectrum: from 220 to 530 nm, we located two distinctly separate peaks. The first in the ultraviolet and the second centering in the blue light at around 450 nm. We have no date for possible absorption for wavelengths shorter than 200 nm.

Emission spectrum:

This is the spectral distribution of stimulated emission. Our new luminescent material can emit with a 150 nm band from 500 nm to 700 nm, with the maximum shifting from 555 n, to 590 nm.

Stimulating spectrum:

This is the long wavelenght absorption spectrum, causing stimulated emission.

Intensive stimulating spectrum: from 800 nm to 1200 nm.

Maximum: between 950 and 1050 nm.

Quantum efficiency:

14% for yellow emitting sample.

The method of measurement was to compare our samples to the commercially available U-70 phosphor, which has the quantum efficiency of 1%.

Excitation condition:

Maximum permitted excitation intensity to provide fully charged phosphor is higher than 100 000 Lux VL.

Storage ability

The phosphor loses less than 3% of its stored energy during three days storage by phosphorescence at room temperature.

Quenching

The phosphor exhibits sensitivity for quenching in orange.

Reproducibility of phosphorus

The reproducibility for brightness and efficiency values for samples prepared with the method according to the invention was within 5%. Reasonable correlation among samples prepared from the same lot of strontium selenide was obtained, but wide variations were frequently found from one lot (series) to another. The discrepancies may be attributed to the different preparation and purification procedures for the strontium selenide.

Example III

Example C (conventional SrS–Sr Se based prior art phosphors

The (SrS:SrSe):(Eu:Sm) phosphor was discovered by Leverenz. and the preparation method and the luminescence properties are disclosed in U.S. Patent 2 527 365 (1950), and Ref.: An Introduction to Luminescence of Solids, by H.W. Leverenz. (Dover 1968). This type of phosphor can be prepared by starting out directly with strontium sulfide and strontium selenide in the desired proportion, to which the activators europium and samarium, and a flux of calcium fluoride may be added. This will yield (by recrystallization) a product which is strontium sulfo-selenide activated by two rare earths. The following luminescent characteristics of the (SrS:SrSe):(Eu:Sm) phosphor was collected from the references listed above, and given for the same comparison consideration as described in Case A.

Luminescent properties of the (SRS:SrSe): (Eu:Sm) phosphor:

- Absorption spectrum:
400 to 500 nm, maximum 475 nm.
- Emission spectrum:
510 to 680 nm, maximum 570 nm, color yellow.
(Depending on the SrS–SrSe concentration)
- Stimulating spectrum:
800–1300 nm, maximum at 1000 nm.
- Quantum efficiency: around 1% as Leverenz only improved the visibility of the phosphor, but not the quantum efficiency.

Improved modified SrS:SrSe based phosphor of present invention

It was found that a strontium sulfide, strontium selenide mixed base, europium, samarium activated and fluxed phosphor can be prepared, according to Leverenz, by mixing the ingredients, and firing the mixture with a suitable heat treatment to form co-crystallized and activated strontium sulfo-selenide. We further found that the strontium selenide not only produces sulfo-selenide with the strontium sulfide, but as it has a high degree thermal dissociation, creates anion vacant sites and evoluted selenium. The evoluted selenium is responsible for the large weight loss of the sample. The strontium sulfide also shows some tendency for thermal dissociation, consequently also creates anion vacancies and freed sulfur.

During recrystallization of the mixed based sample, the thermal dissociation of the components generates vapor around the sample comprised of sulfur and selenium particles, and if the sample is fired in a semi-closed space it will absorb particles from its vapor.

We found that the absorbed particles as anionic impurities are not sulfur or selenium ions, but rather anion complexes formed in the vapor phase from sulfur and selenium.

More particularly, in the first section of the heat treatment, warming up the samples to 1000 Centigrade, first the strontium selenide component starts its thermal dissociation around 800 Centigrade. As described earlier, this generates selenium vapor in the semi-closed space. The evolution of the selenium on the other hand creates vacant anion sites. Some of the selenium vapor can escape from the semi-closed space to the outer inert furnace atmosphere. From 900 to 950 Centigrade the strontium sulfide component also starts to decompose in some degree, adding sulfur particles to the selenium vapor, and further increasing the anion vacancies in the mixed base. Simultaneously and continuously, during the second part of the heat treatment, when the sample temperature approaches 1000 Centigrade, and is held constantly on the firing temperature, the mixed base absorbs particles from the surrounding vapor. The absorbed particles consist of sulfur and selenium, and they will occupy the vacant anion sites in the crystal structure of the mixed base, which according to Leverenz can be called strontium sulfo-selenide. The anionic impurities will then form homogenous solid solution with the mixed base. The final weight loss of a specific sample, fired i the semi-closed space is 3.5%. When the sample is fired in open atmosphere its weight loss is 5.2%. This illustrates the vapor absorption of the sample. The absorbed ions are believed to be $S_nSe_m$ ions. They are formed in the vapor phase with the reaction of sulfur and selenide. The absorbed SSe ions cause a significant change in the luminescent properties of the strontium sulfide, strontium selenide mixed based, europium, samarium activated phosphor. More particularly, the brightness of the stimulated emission and the quantum efficiency increases, the spontaneous phosphorescence decreases, and the phosphor will absorb energy not only around the spectrum of the blue light, but also in the ultraviolet region, and can be excited by high intensity visible and/or ultraviolet ray.

It is believed that this new phosphor may be symbolized by («Strontium sulfo-selenide»: $Sr^{++}SSe^{--}$:flux):Sm:Eu).

Example 3

The following description is an easily reproducible example for the preparation of a novel modified SrS:SrSe based phosphor in accordance with the present invention. The component materials: strontium sulfide and strontium selenide as mixed base, calcium fluoride and strontium sulfate as fluxes, samarium sulfate and europium sulfate as activators are TMI 25 pure, commercially available chemicals. The first step of the preparation is the fine grinding of the strontium sulfide, strontium selenide andfluxes separately in a ball mill, then the strontium sulfide and the fluxes are dried several days in a drying furnace around 100 Centigrade.

For this specific example we used a 10 g mixed base with 80% SrSe, 30% SrS by weight. Further, the phosphor mixture consists of 0.9 g calcium fluoride, 0.9 g strontium sulfate as fluxes, 0.004 g samarium sulfate and 0.005 g europium sulfate for activators. The mixture is intimately ground in a ball mill for 60 minutes. 750 mg of the mixture 24 was pressed into an alumina tube 21 of 18 mm length and 5 mm internal diameter. The tube was placed on an alumina slab 22 and was covered with a 12 mm diameter alumina ball 23. (See Figure 3 for details).

The firing was done in a horizontal electrical tube furnace 20 as shown in Figure 3, using 50 mm diameter quartz muffle tube 20. The sample was loaded into the cold furnace. Before firing the furnace tube was evacuated to 0.02 m bar, then the nitrogen was introduced, with a flow rate of 45 ml/min.

The nitrogen contained not more than 2 ppmV oxygen, and not more than 3 ppmV moisture.

The furnace was heated up to 1000 Centigrade with a rate of C/min, and was held at that temperature for 60 minutes. The sample was colled down freely in flowing nitrogen.

During the recrystallization, as the phospher sample shrinks, creating a surrounding space, it will occupy the center of the alumina tube, without touching it. At one end it will stick to the cover, but is easily removable. The weight loss for the sample is extremely small.

The preparation technique of our new phosphor is not limited to the example given here. It is obvious that many variations can be made in preparation and the heat treatment. The most significant variation is to change the proportion of strontium sulfide and strontium selenide in the mixture as will be discussed hereinlater.

The strontium sulfide can be replaced by calcium sulfide, and strontium selenide can be replaced by calcium selenide partly or wholly in the starting mixture. The mixed strontium sulfide, strontium selenide based, fluxed and activated phosphor mixture can be made with most of the previously known methods. The type of the activator salts used and their concentration can vary as shown in the art. The fluxes serve many purposes. First, to provide a fluid phase for solvation and transportation of ingredients and to increase atomic mobility for the mixed based crystal growth. The second function of the fluxes is to increase the thermal dissociation of strontium sulfide and strontium selenide to an optimum level, to provide anionic vacancies, and sulfur and selenium vapors. We found that many flux or flux combinations can fulfill these requirements.

The heat treatment, as described in the invention is partly a common recrystallization process to incorporate the activator ions into the mixed based matrix. On the other hand, it provides a solid-vapor interface and ion exchange for the strontium sulfo-selenide, where the $S_nSe_m$ ions are replacing partly the selenium or sulfur anions in the phosphor lattice.

The firing conditions, like firing temperature time inert atmosphere, gas flow, heating up and cooling down rate, etc., and, moreover, the construction, arrangement and volume of the semiclosed space, can be changed in some degree from the data given in our example. As is seen from the description of our invention, we carried out the recrystallization in a special semi-closed atmosphere, which contains vapor mixture of sulfur and selenium particles, and it is obvious that if the same atmosphere is created with other methods, the same results can be obtained.

Strontium sulfide and strontium selenide concentration in the phosphor

The samples prepared from 100% strontium sulfide, activated by europium and samarium, and recrystallized, result in a phosphor SrS:(Eu:Sm), which can be excited by blue light, and when stimulated by infrared has orange colored stimulated emission, with a moderate quantum efficiency.

Leverenz claimed in his Patent Nr. 2 527 365 (1950 U.S.), that when strontium selenide replaces strontium sulfide with increasing concentration, the emission color of the europium, samarium activated phosphor is shifted from orange to green. With appropriate proportion of strontium selenide the emission color can be brought near to the maximum spectral sensitivity of the eye. This increases the efficiency of visibility, but not the quantum efficiency. Optimum yellow emission color can be achieved with compositions of 20–40 weight % strontium sulfide and 80–60 weight % strontium selenide. According to Leverenz, if the strontium selenide concentration is higher than 85%, the emission color shifts from yellow to green, but the luminescent efficiency decreases, so 100% strontium selenide shows no stimulability.

When the strontium sulfide, strontium selenide mixed base activated with europium and samarium, is recrystallized in semi-closed atmosphere, as described by this invention, we found that the emission color of our new phosphor is shifted from orange to green with the same tendency as it was stated by Leverenz. The quantum efficiency of the phosphor samples regardless of their emission color is increased compared to the Leverenz phosphors. The optimum concentration of base components for bright yellow emission is 30% strontium sulfide and 70% strontium selenide. This fact suggests two explanations. Firstly, this composition gives the best result to form strontium sulfo-selenide, or secondly, it is possible that the SSe ions can be also formed in very moderate rate with solid state reaction, when the sample is recrystallized by the Leverenz method.

When the strontium sulfide and selenide mixture is co-crystallized according to our method, the proportion of the two components not only plays an important part in the formation of strontium sulfo-selenide, but determines the sulfur and selenium concentration in the sample surrounding vapor. We found that 30% strontium sulfide and 70% strontium selenide base proportion is not only suitable for the optimum formation of strontium sulfo-selenide, but also gives appropriate sulfide-selenide concentration in the vapor.

By the introduction of strontium selenide in the strontium sulfide, and by carrying out the recrystallization in a semi-closed atmosphere, as described in this invention, the resulting phosphor shows not only visibility efficiency increase, but also quantum efficiency increase, and the new phosphor will have an extremely broad absorption spectrum, comprising short and long ultraviolet, in addition to the blue light absorption of (SrS:SrSe):(Eu:Sm) phosphor.

Luminescent properties of novel modified SrS:SrSe based phosphor of example 3

The modified strontium sulfide – strontium selenide mixed base phosphor of Example 3 is a novel luminescent material, with variable emission spectrum between green and orange, depending on the proportions of strontium sulfide and strontium selenide, as described earlier. As this product differs from the existing phosphors with the extended absorption spectrum in the short and long ultraviolet radiation, and with the highly increased quantum efficiency, so it is superior to existing phosphor for pratical uses. The variation in the emission color of our phosphors is just a slight modification, so we consider them to be the same luminescent materials.

Absorption spectrum

This is the electromagnetic spectral band in which the luminescent material is able to absorb and store energy in significant quantity. The fluorescent absorption spectrum is similar to the stimulated absorption spectrum, but its intensity is dependent on the exhaustion level of the luminescent sample. We used a simple method to obtain the absorption spectrum by using 10 nm band width excitation, stepping from 200 nm to 800 nm. After every excitation step of two minutes duration, we left the sample rest for one minute, and then measured the total energy released by stimulated emission to reach a level near to exhaustion. Afterward we stepped with excitation 10 nm further, repeating the process. The intensive absorption spectrum: from 220 nm to 530 nm. We located two distinctly separate peaks. The first in the UV and the second centering the blue light at around 450 nm. We have no data for possible absorption for wavelengths shorter than 200 nm.

Emission spectrum:

This is the spectral distribution of stimulated emission. Our new luminescent material can emit with a 150 nm bandwidth from 500 nm to 700 nm, with the maximum shifting from 555 nm to 590 nm.

Stimulating spectrum

This is the long wavelength absorption spectrum, causing stimulated emission.

Intensive stimulating spectrum: from 800 nm to 1200 nm.
Maximum: between 950 and 1050 nm.

Quantum efficiency:

The measured quantum efficiency of the yellow emitting sample is 13%.

The method of measurement was to compare our samples to the commercially available U-70 phosphor, which has the quantum efficiency of 1%, with conditions set to optimum for the U-70 phosphor.

Excitation condition:

The maximum permitted excitation intensity to provide fully charged phosphor is higher than 100 000 Lux VL.

Storage ability

The phosphor loses less than 3% of its stored energy during three days storage by phosphorescence at room temperature

Quenching

The phosphor exhibits sensitivity for quenching in orange.

Reproducibility of luminescent materials

The reproducibility of the brightness and efficiency values for any one sample prepared with methods according to example 1, 2 or 3 was within about 5%. Reasonable correlation among samples prepared from the same lot of strontium selenide or sulfide was obtained, but wide variations were frequently found from one lot (series) to another. The discrepancies may be attributed to the different preparation and purification procedures for the strontium selenide, and strontium sulfide.

## Claims

1. A method for the production of improved luminescent materials (phosphors) comprising the steps of:

(a) providing a fluxed and doubly activated base matrix known to be convertible into infrared sensitive material by recrystallization, said base matrix being selected from the group consisting of strontium sulfide, calcium sulfide, strontium selenide, calcium selenide and mixture of the foregoing and the activators are selected from the group consisting of Eu, Sm, Bi, Gd, Dy, Lu, Yb, Tm, Er, Tb, in such manner that one of the selected activators functions as «dominant» and the other as «auxilliary» activator;

(b) firing said fluxed and doubly activated base matrix in an inert atmosphere at a suitable elevated recrystallization temperature for a sufficient period of time to effect a suspension of activator ions in the final crystal product of homogenous composition as well as thermal dissociation of at least part of the base matrix to release some of the sulfur and/or selenium atoms from the base resulting in the formation of defects or vacancies in the base matrix;

(c) producing sulfur and selenium vapor particles in the inert atmosphere surrounding the fluxed and activated base matrix by producing sulfur vapor by the thermal decomposition of the sulfide base or the sulfide base component or by the evaporation of sulfur; and producing selenium vapor particles by the thermal decomposition of the selenide base, or the selenide base component or by the evaporation of selenium, or by thermal decomposition of selenide not part of the phosphor mixture, and providing conditions to bring or to keep said vapor particles in the vicinity of the base material during its heat treatment;

(d) absorbing on said vacancies of the base matrix complexes which is represented by the formula $S_nSe_m$ wherein n and m are integers, n being 1 to x and m being 1 to y wherein x and y are the numer of component atoms at the temperatures at which the anion complexes are formed, said anion complexes formed by said sulfur and selenium particles to fill up vacancies and provide luminescent crystals having improved luminescent characteristics.

2. A method according to claim 1 wherein the heat treatment firing temperature to effect the desired recrystallization of the activated base to form luminescent material is in the range of 900 to 1200 °C.

3. A method according to claim 1 wherein the temperature is in the range of 900 to 1000 °C.

4. A method according to claim 3 wherein in the formula $S_nSe_m$ n is 1 to 10 and m is 1 to 6.

5. A method according to claim 1 wherein the flux agent in an amount from 1 to 25% by weight of the unfired base matrix as one or a combination of fluxes selected from the group consisting of $CaF_2$ $SrF_2$, LiF, $MgF_2$, NaCl, $SrCl_2$, $SrSO_4$, SrO and $SrSO_3$.

6. A method according to claim 1 wherein the flux agent is in a strontium compound andin an amount from 1 to 25% by weight of the unfired base matrix.

7. A method according to claim 1 wherein the base for the luminescent composition being fluxed, activated and fired, is selected fr the group of SrS, CaS, SrS+CaS, SrSe, SrSe+Srs, SrSe+CaS and SrSe+Cas+SrS and where in each case calcium selenide can replace wholly or partly strontium selenide.

8. A method according to claim 1 wherein the base matrix is a sulfide, or mixed sulfide base, said base matrix fired in the presence of a concentration of selenium vapor in the inert gas atmosphere, in such a way that sulfide base matrix will absorb on its surface the vapor anion complex particles of sulfur and selenium which have been generated by thermal decomposition of said sulfur matrix and the independent selenium vapor generating source.

9. A method according to claim 1 or claim 8 wherein the unfired base matrix for luminescent composition is selected from the group consisting of Srs, Cas and mixtures of the foregoing.

10. A method according to claim 1 or claim 8 wherein the selenium vapor is generated by the thermal decomposition of strontium selenide independent from the luminescent composition.

11. A method according to claim 1 wherein the luminescent composition being fired is selenide based wherein the selenium vapor is generated by the thermal decomposition of selenide base, and sulfur vapor by sulfur containing product in such a way that the phosphor mixture is surrounded by said selenium, and sulfur containing vapor during its heat treatment, and the selenide matrix will absorb homogeneously anion complex particles from its surrounding containing sulfur and selenium atoms.

12. A method according to claim 1, where the base matrix is doubly activated and fluxed strontium selenide and/or calcium selenide, in accordance with claim 7.

13. A method according to claim 11 wherein the sulfur vapor particles are generated by the vaporization of solid sulfur.

14. A method according to claim 11 wherein the replacing anions include not only anion complexes of sulfur and selenium atoms, but also selenium or sulfur anions.

15. A method according to claim 1 wherein the unfired base matrix of phosphor composition is mixed sulfide and selenide, the sulfur and selenium vapor atmosphere being generated by the partial dissociation of the sulfide component and selenide component of the mixed base, the dissociation results vacancies in the base matrix, due to the release of sulfur and selenium the mixed base matrix will absorb sulfur and selenium containing anion complexes to fill up its vacancies and provide luminescent crystals having improved luminescent characteristics.

16. A method according to claim 1 or claim 15 where the cation strontium and/or calcium and the anion is sulfur and selenium in the base structure.

17. A method according to claim 15 wherein the sulfur or selenium concentration in the sample surrounding vapor is further increased by additional and independent sulfur or selenium vapor producing products.

18. A novel luminescent material prepared in accordance with the method of claim 1.

19. An infrared sensitive phosphor composition consisting of a fused and modified sulfide base, comprising 60–90 weight % sulfide or mixed sulfides, 40–10 weight % strontium and/or calcium cations paired with $S_nSe_m$ wherein n and m are integers, n being 1 to x and m being 1 to y wherein x and y are the number of component atoms at the temperature at which the anion complexes are formed, and incorporated activator pairs produced in accordance with the method of claim 7.

20. A highly sensitive infrared stimulable luminescent material according to claim 19 wherein the base for the unfired luminescent composition is SrS or CaS or Srs+CaS in any proportion.

21. A luminescent material as claimed in claim 17 or claim 20 where the preferred activator pair is Eu and Sm or Eu and Bi, in the concentration of each 10 to 300 ppm of the unfired base, adapted to absorb ultraviolet and visible light and remit the absorbed and stored energy when it is stimulated by near infrared radiation.

22. An infrared sensitive luminescent material produced from modified strontium or calcium selenide base comprising 60–90 weight % original strontium or calcium selenide, 0–10 weight % produced strontium or calcium sulfide, 40–10 weight % strontium or calcium cation paired with $S_nSe_m$ wherein n and m are integers, n being 1 to x and m being 1 to y wherein x and y are the number of component atoms at the temperature at which the anion complexes are formed, with the incorporation of activator pairs in accordance with the method of claim 11.

23. A highly sensitive infrared stimulable luminescent material according to claim 22 where sulfur vapor is generated by the vaporization of solid sulphur.

24. Luminescent material as claimed in claim 22 or 23 where the preferred activator pair is Eu and Sm or Eu and Bi, in the concentration of each 10 to 300 ppm of the unfired base, characterised by absorption spectrum in short and long ultraviolet and blue light, stimulated emission spectrum changing from green to orange by increasing the sulfur anion concentration in the matrix, and by high infrared sensitivity in the near infrared spectrum, as a consequence of the replacement of selenium anions by sulfur and selenium containing anionic complexes.

25. Infrared sensitive phosphor composition consisting of modified and co-crystallized sulfide and selenide mixed base comprising 60–90 weight % sulfo-selenide, and 40–10 weight % original cations paired with $S_nSe_m$ wherein n and m are integers, n being 1 to x and m being 1 to y wherein x and y are the number of component atoms at the temperature at which the anion complexes are formed and incorporated activator pairs produced in accordance with the method of claim 15.

26. A highly sensitive infrared stimulable luminescent material according to claim 25 where the base for the unfired luminescent composition is a mixture of strontium or calcium selenide and strontium or calcium sulfide, where the preferred proportion of the sulfide base component is varying from 10 to 40% by weight and the selenide base component varying from 90–60% weight of the mixed base.

27. Luminescent material adapted to be stimulated by near infrared radiation after being excited by shorter wave energy according to claim 25, comprising the mixed base, and preferred activator pair Eu and Sm, or Eu and Bi, in the concentration of each 10 to 500 ppm of the unfired base and further comprising $CaF_2$ or $SrF_2$ and preferred fluxes for recrystallization to result a bright visible light stimulated emission in variable wavelengths from green to orange depending on the selected cations of the base, and on the proportion of base components.

## Patentansprüche

1. Verfahren zur Herstellung verbesserter lumineszierender Materialien (Phosphore), das die folgenden Verfahrensschritte umfasst:

(a) Bereitstellen einer Flussmittel enthaltenden und doppelt aktivierten Grundmatrix, die bekanntermassen durch Umkristallisation in ein Infrarotempfindliches Material umgewandelt werden kann, wobei das Material der Grundmatrix ausgewählt ist unter Strontiumsulfid, Calciumsulfid, Strontiumselenid, Calciumselenid und Mischungen der genannten Materialien, und die Aktivatoren ausgewählt sind unter Eu, Sm, Bi, Gd, Dy, Lu, Yb, Tm, Er und Tb, in der Weise, dass einer der ausgewählten Aktivatoren als Haupt-Aktivator und der andere als Hilfs-Aktivator fungieren;

(b) Brennen der Flussmittel enthaltenden und doppelt aktivierten Grundmatrix in inerter Atmosphäre bei einer geeigneten erhöhten Umkristallisations-Temperatur über eine ausreichende Zeitspanne, um ein Suspendieren von Aktivator-Ionen in dem kristallinen Endprodukt homogener Zusammensetzung sowie die thermische Dissoziation wenigstens eines Teils der Grundmatrix zu bewirken, um einige der Schwefel- und/oder Selen-Atome aus dem Grundmaterial freizusetzen und damit Defekte oder Leerstellen in der Grundmatrix zu bilden;

(c) Herstellen von Teilchen aus Schwefel- und Selen-Dampf in der inerten Atmosphäre, die die Flussmittel enthaltende und aktivierte Grundmatrix umgibt, durch Herstellen von Schwefeldampf durch thermisches Zersetzen des Sulfid-Grundmaterials oder der das Sulfid-Grundmaterial enthaltenden Komponente oder durch Verdampfung von Schwefel, und Herstellung von Teilchen aus Selen-Dampf durch thermische Zersetzung des Selenid-Grundmaterials oder der das Selenid-Grundmaterial enthaltenden Komponente oder durch Verdampfen von Selen oder durch thermische Zersetzung von Selenid, das nicht Teil der das lumineszierende Material (Phosphor) enthaltenden Mischung ist, und Einstellung von Bedingungen, um die Dampf-Teilchen in die Nähe des Grundmaterials zu bringen oder sie dort zu halten, während dieses aufgeheizt wird; und

(d) an die Fehlstellen der Grundmatrix Absorbieren von Komplexen, die durch die Formel $S_nSe_m$ wiedergegeben werden, worin n und m ganze Zahlen sind, n 1 bis x und m 1 bis y bedeutet, worin x und y die Anzahl der Atome der Komponenten bei den Temperaturen sind, bei denen die Anion-Komplexe gebildet werden, wobei die Anion-Komplexe, die durch die Schwefel- und Selen-Teilchen gebildet werden, die Fehlstellen auffüllen und lumineszierende Kristalle mit verbesserten charakteristischen Lumineszenz-Eigenschaften bilden sollen.

2. Verfahren nach Anspruch 1, worin die Brenn-Temperatur des Hitzebehandlungs-Schrittes mit dem Ziel, die gewünschte Umkristallisation der aktivierten Grundsubstanz unter Bildung des lumineszierenden Materials zu bewirken, im Bereich von 900 bis 1200 °C liegt.

3. Verfahren nach Anspruch 1, worin die Temperatur im Bereich von 900 bis 1000 °C liegt.

4. Verfahren nach Anspruch 3, worin in der Formel $S_nSe_m$ n 1 bis 10 und m 1 bis 6 bedeutet.

5. Verfahren nach Anspruch 1, worin das Flussmittel in einer Menge von 1 bis 25 Gew.-%, bezogen auf die ungebrannte Grundmatrix, als einzelnes Flussmittel oder eine Kombination von Flussmitteln, ausgewählt unter $CaF_2$, $SrF_2$, LiF, $MgF_2$, NaCl, $SrCl_2$, $SrSO_4$, SrO und $SrSO_3$, vorliegt.

6. Verfahren nach Anspruch 1, worin das Flussmittel eine Strontiumverbindung ist und in einer Menge von 1 bis 25 Gew.-%, bezogen auf die ungebrannte Grundmatrix, vorliegt.

7. Verfahren nach Anspruch 1, worin das Grundmaterial für die lumineszierende Zusammensetzung, das mit einem Flussmittel versehen, aktiviert und gebrannt wird, ausgewählt ist aus der Gruppe SrS, CaS, SrS+CaS, SrSe, SrSe+SrS, SrSe+CaS und SrSe+CaS+SrS, und worin in jedem Fall Calciumselenid ganz oder teilweise Strontiumselenid ersetzen kann.

8. Verfahren nach Anspruch 1, worin die Grundmatrix ein Sulfid-Grundmaterial oder gemischtes Sulfid-Grundmaterial ist und diese Grundmatrix in Gegenwart einer gewissen Konzentration von Selen-Dampf in der Inertgas-Atmosphäre in solch einer Weise gebrannt wird, dass die Sulfid-Grundmatrix auf ihrer Oberfläche die im Dampfzustand vorliegenden komplexen Anion-Teilchen aus Schwefel und Selen absorbiert, die durch thermische Zersetzung der Schwefel-Matrix und durch die unabhängige Selendampf-Quelle gebildet wurden.

9. Verfahren nach Anspruch 1 oder Anspruch 8, worin die ungebrannte Grundmatrix für die lumineszierende Zusammensetzung ausgewählt ist unter SrS, CaS und Mischungen der vorgenannten Stoffe.

10. Verfahren nach Anspruch 1 oder Anspruch 8, worin der Selen-Dampf durch thermische Zersetzung von Strontiumselenid unabhängig von der lumineszierenden Zusammensetzung gebildet wird.

11. Verfahren nach Anspruch 1, worin die lumineszierende Zusammensetzung, die gebrannt wird, eine Zusammensetzung auf Selenid-Basis ist, worin der Selen-Dampf durch thermische Zersetzung des Selenid-Ausgangsmaterials gebildet wird, und der Schwefel-Dampf aus einem Schwefel emthaltenden Produkt in der Weise gebildet wird, dass das lumineszierende Material (Phosphor) während der Wärme-Behandlung von dem Selen und dem Schwefel enthaltenden Dampf umgeben ist und die Selenid-Matrix komplexe Anion-Teilchen aus der Schwefel- und Selenatome enthaltenden Umgebung homogen absorbiert.

12. Verfahren nach Anspruch 1, worin die Grundmatrix aus doppelt aktiviertem und mit Flussmittel behandeltem Strontiumselenid und/oder Calciumselenid nach Anspruch 7 besteht.

13. Verfahren nach Anspruch 11, worin die Schwefeldampf-Teilchen durch Verdampfung von festem Schwefel gebildet werden.

14. Verfahren nach Anspruch 11, worin die eintretenden Anionen nicht nur Anionen-Komplexe von Schwefel- und Selen-Atomen umfassen, sondern auch Selen- oder Schwefel-Anionen.

15. Verfahren nach Anspruch 1, worin die ungebrannte Grundmatrix der Phosphor-Zusammensetzung ein gemischtes Sulfid und Selenid ist, wobei die Schwefel- und Selendampf-Atmosphäre durch teilweise Dissoziation der Sulfid-Komponente und Selenid-Komponente der Misch-Grundsubstanz gebildet wird und wobei die Dissoziation zu Fehlstellen in der Grundmatrix führt und worin aufgrund der Freisetzung von Schwefel und Selen die gemischte Grundmatrix Schwefel und Selen enthaltende Anion-Komplexe zur Auffüllung der Fehlstellen und Bildung lumineszierender Kristalle mit verbesserten charakteristischen Lumineszenz-Eigenschaften absorbiert.

16. Verfahren nach Anspruch 1 oder Anspruch 15, worin das Kation in der Grundstruktur Strontium und/oder Calcium und das Anion Schwefel und Selen sind.

17. Verfahren nach Anspruch 15, worin die Schwefel- oder Selen-Konzentration in dem die Probe umgebenden Dampf durch zusätzliche und unabhängige Schwefel- oder Selen-Dampf bildende Produkte weiter erhöht wird.

18. Neues lumineszierendes Material, hergestellt nach der Verfahrensweise von Anspruch 1.

19. Infrarot-empfindliche Phosphor-Zusammensetzung, bestehend aus einer geschmolzenen und modifizierten Sulfid-Grundsubstanz umfassend 60 bis 90 Gew.-% Sulfid oder einer Mischung von Sulfiden, 40 bis 10 Gew.-% Strontium- und/oder Calcium-Kationen und dazugehörige Gruppen $S_nSe_m$, worin n und m ganze Zahlen sind, n 1 bis x und m 1 bis y bedeutet, worin x und y die Zahl der Komponenten-Atome bei der Temperatur sind, bei der die Anion-Komplexe gebildet werden, und eingebauten Aktivator-Paaren, hergestellt nach der Verfahrensweise von Anspruch 7.

20. Hochempfindliches, durch Infrarotstrahlung anregbares lumineszierendes Material nach Anspruch 19, worin die Grundsubstanz für die ungebrannte lumineszierende Zusammensetzung SrS oder CaS oder SrS+CaS in beliebigem Verhältnis sind.

21. Lumineszierendes Material nach Anspruch 17 oder Anspruch 20, worin das bevorzugte Aktivator-Paar Eu und Sm oder Eu und Bi ist, wobei deren Konzentration jeweils 10 bis 300 ppm, bezogen auf die ungebrannte Ausgangssubstanz, beträgt und wobei das Material geeignet ist, ultraviolettes und sichtbares Licht zu absorbieren und die absorbierte und gespeicherte Energie wieder zu emittieren, wenn es durch Strahlung im nahen Infrarot-Bereich angeregt wird.

22. Infrarot-empfindliches lumineszierendes Material, hergestellt aus einer modifizierten Strontium- oder Calcium-Selenid-Grundsubstanz umfassend

– 60 bis 90 Gew.-% ursprüngliches Strontium- oder Calcium-Selenid,

– 0 bis 10 Gew.-% produziertes Strontium- oder Calcium-Sulfid,

– 40 bis 10 Gew.-% Strontium- oder Calcium-Kationen mit dazugehörigen Gruppen $S_nSe_m$, worin n und m ganze Zahlen sind, n 1 bis x und m 1 bis y sind, worin x und y die Anzahl der Komponenten-Atome bei der Temperatur bedeuten, bei der die Anion-Komplexe gebildet werden, unter Einbeziehung von Aktivator-Paaren in Übereinstimmung mit dem Verfahren nach Anspruch 11.

23. Hochempfindliches, Infrarot-anregbares lumineszierendes Material nach Anspruch 22, worin der Schwefeldampf gebildet wird durch Verdampfung festen Schwefels.

24. Lumineszierendes Material nach Ansprüchen 22 oder 23, worin das bevorzugte Aktivator-Paar Eu und Sm oder Eu und Bi ist, in einer Konzentration von jeweils 10 bis 300 ppm, bezogen auf die ungebrannte Grundsubstanz, charakterisiert durch ein Absorptionsspektrum im Bereich kurzen und langen Ultraviolett- und blauen Lichts, ein Anregungs-Emissionsspektrum wechselnd von grün nach orange bei Anstieg der Schwefelanion-Konzentration in der Matrix und durch hohe Infrarot-Empfindlichkeit im nahen Infrarot-Spektrum als Folge des Ersatzes von Selen-Anionen durch Schwefel und Selen enthaltende anionische Komplexe.

25. Infrarot-empfindliche Phosphor-Zusammensetzung bestehend aus einer modifizierten und co-kristallisierten gemischten Sulfid- und Selenid-Grundsubstanz umfassend

– 60 bis 90 Gew.-% Sulfo-Selenid und

– 40 bis 10 Gew.-% ursprünglicher Kationen mit zugehörigen Gruppen $S_nSe_m$, worin n und m ganze Zahlen sind und n 1 bis x und m 1 bis y sind, worin x und y die Anzahl der Komponenten-Atome bei der Temperatur sind, bei der die Anion-Komplexe gebildet werden, sowie eingebaute Aktivator-Paare, die nach der Verfahrensweise von Anspruch 15 hergestellt wurden.

26. Hochempfindliche, durch Infrarot-Strahlung anregbare lumineszierende Materialien nach Anspruch 25, worin die Grundsubstanz für die ungebrannte lumineszierende Zusammensetzung eine Mischung aus Strontium- oder Calcium-Selenid und Strontium- oder Calcium-Sulfid ist, worin sich der bevorzugte Anteil der Sulfid-Grundkomponente im Bereich von 10 bis 40 Gew.-% und der der Selenid-Grundkomponente im Bereich von 90 bis 60 Gew.-%, bezogen auf die Grundsubstanz-Mischung, bewegt.

27. Zur Anregung durch Strahlung im nahen Infrarot-Bereich nach Anregung durch Energie kürzerer Wellen nach Anspruch 25 geeignetes lumineszierendes Material, umfassend die Mischung der Grundsubstanzen, und als bevorzugtes Aktivator-Paar Eu und Sm oder Eu und Bi, jeweils in Konzentrationen von 10 bis 500 ppm, bezogen auf die ungebrannte Grundsubstanz, wobei das Material zusätzlich $CaF_2$ oder $SrF_2$ als bevorzugte Flussmittel zur Umkristallisation umfasst, um nach Anregung durch sichtbares Licht eine helle Emission in variablen Wellenlängen von grün bis orange, abhängig von den ausgewählten Kationen der Grundsubstanz und vom Mengenverhältnis der Grund-Komponenten zu bewirken.

## Revendications

1. Procédé de fabrication de matières luminescentes améliorées (luminophores ou «phosphors») comprenant les stades suivants:

(a) la réalisation d'une matrice de base avec fondant et doublement activée, connue pour pouvoir être convertie en matière sensible à l'infrarouge par recristallisation, ladite matrice de base étant sélectionnée dans le groupe constitué par le sulfure de strontium, le sulfure de calcium, le séléniure de strontium, le séléniure de calcium et un mélange de ceux-ci, et les activateurs étant sélectionnés dans le groupe constitué par Eu, Sm, Bi, Gd, Dy, Lu, Yb, Tm, Er, Tb, de telle façon que l'un des activateurs sélectionnés fonctionne comme activateur «dominant» et l'autre, comme activateur «auxiliaire»;

(b) la cuisson de ladite matrice de base avec fondant et doublement activée en atmosphère inerte à une température de recristallisation élevée convenable, pendant un temps suffisant pour produire une dispersion d'ions d'activateurs dans le produit cristallin final à composition homogène ainsi que la dissociation thermique d'au moins une partie de la matrice de base pour libérer de la base certains des atomes de soufre et/ou sélénium, ce qui entraîne la formation de défauts ou de lacunes dans la matrice de base;

(c) la production de particules de vapeur de soufre et de sélénium dans l'atmosphère inerte entourant la matrice de base avec fondant et activée en produisant de la vapeur de soufre par décomposition thermique du sulfure de la base ou du composant de sulfure de la base ou par évaporation de soufre; et la production de particules de vapeur de sélénium par décomposition thermique du séléniure de la base ou du composant de séléniure de la base ou par évaporation de sélénium, ou par décomposition thermiqe de séléniure ne faisant pas partie du mélange luminescent, et l'établissement de conditions pour amener ou conserver lesdites molécules de vapeur au voisinage de la matière de base pendant son traitement thermique;

(d) l'absorption, dans lesdites lacunes de la matrice de base, de complexes représentés par la formule $S_nSe_m$ où n et m sont des nombres entiers, n étant égal à 1 à x, et m, égal à 1 à y, x et y étant le nombre d'atomes de composants aux températures sous lesquelles les complexes d'anions sont formés, lesdits complexes d'anions étant formés par lesdites particules de soufre et de sélénium pour remplir les lacunes et fournir les cristaux luminescents ayant des caractéristiques de luminescence améliorées.

2. Procédé selon la revendication 1, dans lequel la température de cuisson du traitement thermique pour effectuer la recristallisation désirée de la base activée pour former une matière luminescente est située dans la gamme de 900 à 1200 °C.

3. Procédé selon la revendication 1, dans lequel la température est située dans la gamme de 900 à 1000 °C.

4. Procédé selon la revendication 3, dans lequel, dans la formule $S_nSe_m$, n est égal à 1 à 10 et m, égal à 1 à 6.

5. Procédé selon la revendication 1, dans lequel l'agent fondant, en quantité de 1 à 25% en poids de la matrice de base non cuite, est un agent fondant ou une combinaison d'agents fondants sélectionnés dans le groupe constitué par $CaF_2$, $SrF_2$, LiF, $MgF_2$, NaCl, $SrCl_2$, $SrSO_4$, SrO et $SrSO_3$.

6. Procédé selon la revendication 1, dans lequel l'agent fondant est un composé de strontium, en quantité de 1 à 25% en poids de la matrice de base non cuite.

7. Procédé selon la revendication 1, dans lequel la base pour la composition luminescente, additionnée de fondant, activée et cuite, est choisie dans le groupe constitué par SrS, CaS, SrS+CaS, SrSe, SrSe+Srs, SrSe+CaS et SrSe+CaS+SrS, où dans chaque cas le séléniure de calcium peut remplacer, totalemen ou partiellement, le séléniure de strontium.

8. Procédé selon la revendication 1, dans lequel la matrice de base est une base formée de sulfure ou d'un mélange de sulfures, ladite matrice de base étant cuite en présence d'une concentration de vapeur de sélénium dans l'atmosphère de gaz inerte, de telle façon que la matrice à base de sulfure absorbera à sa surface les particules complexes anioniques de vapeur de soufre et de sélénium qui ont été générées par la décomposition thermique de ladite matrice de sulfure et par la source indépendante génératrice de vapeur de sélénium.

9. Procédé selon la revendication 1 ou 8, dans lequel la matrice de base non cuite pour la composition luminescente est sélectionnée dans le groupe conitué par SrS, CaS et des mélanges de ceux-ci.

10. Procédé selon la revendication 1 ou 8, dans lequel la vapeur de sélénium est générée par décomposition thermique de séléniure de strontium indépendant de la composition luminescente.

11. Procédé selon la revendication 1, dans lequel la composition luminescente qui est cuite est à base de séléniure, la vapeur de sélénium étant générée par décomposition thermique de la base de séléniure, et la vapeur de soufre par un produit contenant du soufre, de telle façon que le mélange luminescent soit entouré par ladite vapeur contenant du sélénium et du soufre pendant son traitement thermique, et la matrice de sélénium absorbera de façon homogène les particules complexes anioniques de son environnement contenant des atomes de soufre et de sélénium.

12. Procédé selon la revendication 1, dans lequel la matrice de base est du séléniure de strontium et/ou séléniure de calcium, doublement activé et additionné de fondant selon la revendication 7.

13. Procédé selon la revendication 11, dans lequel les molécules de vapeur de soufre sont générées par vaporisation de soufre solide.

14. Procédé selon la revendication 11, dans lequel les anions de remplacement incluent non seuelement des complexes anioniques d'atomes de soufre et de sélénium, mais aussi des anions sélénium ou soufre.

15. Procédé selon la revendication 1, dans lequel la matrice de base non cuite de la composition luminescente est un sulfure et séléniure mixte, l'atmosphère de vapeurs de soufre et de sélénium étant générée par dissociation partielle du composant sulfure et du composant séléniure de la base mixte, la dissociation provoquant des lacunes dans la matrice de base, dues à la libération du soufre et du sélénium, la matrice de base mixte devant absorber du soufre et du sélénium contenant des complexes anioniques pour remplir ses lacunes et fournir des cristaux luminescents ayant des caractéristiques de luminescence améliorées.

16. Procédé selon la revendication 1 ou 15, dans lequel le cation est du strontium et/ou du calcium et l'anion, du soufre et du sélénium dans la structure de base.

17. Procédé selon la revendication 15, dans lequel la concentration de soufre ou de sélénium dans la vapeur entourant l'échantillon est encore augmentée par des produits indépendants produisant de la vapeur de soufre ou de sélénium.

18. Nouvelle matière luminescente préparée conformément au procédé de la revendication 1.

19. Composition luminescente sensible à l'infra-rouge, constituée par une base de sulfure fondue et modifiée, comprenant 60 à 90% en poids de sulfure ou de mélanges de sulfures, 40 à 10% en poids de cations de strontium et/ou calcium appariés avec $S_nSe_m$, où n et m sont des nombres entiers, n étant égal à 1 à x et m àgal à 1 à y, x et y étant le nombre d'atomes de composants à la température à laquelle les complexes anioniques sont formés, et des paires d'activateurs incorporés produits conformément au procédé de la revendication 7.

20. Matière luminescente extrêmement sensible stimulable à l'infra-rouge selon la revendication 19, dans laquelle la base pour la composition luminescente non cuite est SrS, ou CaS ou SrS+CaS dans un rapport quelconque.

21. Matière luminescente selon la revendication 17 ou 20, dans laquelle la paire d'activateurs préférés est Eu et Sm ou Eu et Bi, avec concentration pour chacune de 10 à 300 ppm de la base non cuite, adaptée à absorber l'ultra-violet et la lumière visible et réémettre l'énergie absorbée emmagasinée lorsque la matière est stimulée par un rayonnement d'infra-rouge proche.

22. Matière luminescente sensible à l'infra-rouge, produite à partir d'une base de séléniure de strontium ou de calcium modifiée, comprenant 60 à 90% en poids de séléniure de strontium ou de calcium d'origine, 0 à 10% en poids de sulfure de strontium ou de calcium produit, 40 à 10% en poids de cations de strontium ou de calcium appariés avec $S_nSe_m$, où n et m sont des nombres entiers, n étant égal à 1 à x et m, égal à 1 à y, x et y étant les nombres d'atomes de composants à la température à laquelle les complexes anioniques sont formés, avec incorporation de paires d'activateurs conformément au procédé de la revendication 11.

23. Matière luminescente extrêmement sensible stimulable à l'infra-rouge selon la revendication 22, dans laquelle la vapeur des soufre est générée par vaporisation de soufre solide.

24. Matière luminescente selon la revendication 22 ou 23, avec laquelle la paire d'activateurs préférée est Eu et Sn ou Eu et Bi, avec concentration pour chacune de 10 à 300 ppm de la base non cuite, caractérisée par un spectre d'absorption en ultra-violet court et long et en lumière bleue, le spectre d'émission stimulée variant du vert à l'orange quand la concentration d'anions de soufre dans la matrice augmente, et par une sensibilité infra-rouge élevée dans le spectre d'infra-rouge proche comme conséquence du remplacement des anions sélénium par des complexes anioniques contenant du soufre et du sélénium.

25. Composition luminescente sensible à l'infra-rouge, constituée par une base mixte de sulfure et séléniure, modifiés et co-cristallisés, comprenant 60 à 90% en poids de sulfoséléniure et 40 à 10% en poids de cations d'origine appariés avec $S_nSe_m$, où n et m sont des nombres entiers, n'étant égal à 1 à x et m, égal à 1 à y, x et y étant le nombre d'atome de composant à la température sous laquelle les complexes anioniques sont formés et les paires d'activateurs incorporés sont produits conformément au procédé de la revendication 15.

26. Matière luminescente extrêmement sensible stimulable à l'infra-rouge selon la revendication 25, dans laquelle la base de la composition luminescente non cuite est un mélange de séléniure de strontium ou calcium et de sulfure de strontium ou calcium avec la proportion préférée du composant sulfure de la base variant de 10 à 40% en poids, et la composant séléniure de la base variant de 90 à 60% en poids de la base mixte.

27. Matière luminescente adaptée à être stimulée par un rayonnement d'infra-rouge proche après avoir été excitée par de l'énergie sur onde plus courte selon la revendication 25, comprenant la base mixte, et la paire d'activateurs préférés Eu et Sm, ou Eu et Bi, avec concentration pour chacune de 10 à 500 ppm de la base non cuite et comprenant en outre $CaF_2$ ou $SrF_2$ et des fondants préférés pour la recristallisation pour obtenir une émission brillante stimulée en lumière visible sur des longueurs d'onde variables allant du vert à l'orange suivant les cations sélectionnés de la base et des proportions de composants de base.

1/4

FIG.1

FIG.2

FIG.3

STRONTIUM SULFIDE
WEIGHT INCREASE

FURNACE
TEMPERATURE C°

HEATING UP     CONSTANT TEMPERATURE     COOLING DOWN

A

1000

920

800

4

D

2

3

1

TIME

B

C

STRONTIUM SULFIDE AND
STRONTIUM SELENIDE
WEIGHT LOSS

FIG.4

3/4

FIG.5

FIG.6